# EUROPÄISCHE PATENTSCHRIFT

(11) **EP 1 792 142 B1**
(45) Veröffentlichungstag und Bekanntmachung des Hinweises auf die Patenterteilung: **16.11.2011**
(21) Anmeldenummer: 05773243.0
(22) Anmeldetag: 19.07.2005
(51) Int. Cl.: G01D 5/20

(54) **VORRICHTUNG UND VERFAHREN ZUR ERFASSUNG DER POSITION UND DER GESCHWINDIGKEIT EINES MESSOBJEKTS**
DEVICE AND METHOD FOR DETECTING THE POSITION AND THE VELOCITY OF A TEST OBJECT
DISPOSITIF ET PROCEDE POUR LA DETECTION DE LA POSITION ET DE LA VITESSE D'UN OBJET D'ESSAI

(30) Priorität: 21.09.2004 DE 102004046031; 16.02.2005 DE 102005007265
(43) Veröffentlichungstag der Anmeldung: 06.06.2007
(73) Patentinhaber: Micro-Epsilon Messtechnik GmbH & Co. KG, 94496 Ortenburg (DE)
(72) Erfinder: SELLEN, Martin, 94496 Ortenburg (DE); MEDNIKOV, Felix, 94496 Ortenburg (DE); NECHAEWSKIJ, Mark, Samara, 443110 (RU)
(74) Vertreter: Ullrich & Naumann
(86) Internationale Anmeldenummer: PCT/DE2005/001274
(87) Internationale Veröffentlichungsnummer: WO 2006/032226

(56) Entgegenhaltungen:
- EP-A- 0 478 813
- GB-A- 1 248 773
- US-A- 3 343 148
- US-A- 3 560 845
- US-A- 5 432 421
- US-B1- 6 356 075

## Beschreibung

Die Erfindung betrifft eine Vorrichtung und ein Verfahren zur Erfassung von Position und Geschwindigkeit eines Messobjekts relativ zu einem Sensor, wobei der Sensor und das Messobjekt relativ zueinander verschiebbar angeordnet sind, wobei der Sensor eine Messspule mit mindestens einem, vorzugsweise mehreren Spannungsabgriff/-en und ein an das Messobjekt angebrachtes und mit der Messspule elektromagnetisch gekoppeltes Target aufweist und wobei dem Sensor ein elektronisches Bauteil zum Addieren der an dem Sensor abgegriffenen Spannungen zugeordnet ist.

Messvorrichtungen der genannten Art werden beispielsweise zur Kolbenpositionsbestimmung an pneumatischen und hydraulischen Zylindern wie auch zur Messung von Ventilstellungen insbesondere in geschlossenen Regelkreisen benötigt. Für derartige Anwendungen ist es vorteilhaft, wenn die Position des Messobjekts und dessen Bewegungsgeschwindigkeit relativ zum Sensor gleichzeitig und absolut gemessen werden können.

Messvorrichtungen zur Bestimmung der Position eines Ventils sind seit langem bekannt. So zeigt beispielsweise die Druckschrift DE 198 56 528 A1 ein Ventilhubsensor zur Stellungserfassung von Aus- und Einlassventilen, der zwei in einem Abstand zueinander angeordnete Statorkörper mit kreisrunden Ausnehmungen für einen Sensorstößel aufweist. Zwischen den Statorkörpern und im Abstand dazu ist ein Hallsensor angeordnet. Der zylinderförmig ausgebildete Sensorstößel ist mit einem Permanentmagnet versehen, der gegenüber dem Hallsensor verschoben wird. Vorteilhaft für diese Ausführung ist die kleine Abmessung des Hallsensors. Jedoch kann mit diesem Sensor lediglich die Position des Ventils ermittelt werden.

Bei anderen aus dem Stand der Technik bekannten Wegsensoren (zum Beispiel aus den Druckschriften DE 25 11 683 C3 oder DE 39 13 861 A1) sind eine Sekundärspule auf einen langgestreckten weichmagnetischen Sensorkern und an dessen Enden zwei Primärspulen gewickelt. Als Messobjekt dient ein Magnet, der sich längs des Sensorkerns bewegt. Durch Strombeaufschlagung der Primärspule wird in der Sekundärspule in Abhängigkeit von der Position des Magnets, der den weichmagnetischen Sensorkern in seiner unmittelbaren Nähe in Sättigung bringt, eine Spannung induziert. Nachteilig ist hierbei die große Dimensionierung des Sensors. Dazu kann auch hier lediglich die Position bestimmt werden.

Weiterhin ist aus der DE 42 25 968 A1 ein Wirbelstromsensor bekannt, bei dem eine Messspule mit mehreren Spannungsabgriffen vorgesehen ist. Durch einen die Messspule umgreifenden Ring aus elektrisch leitendem Material wird in Abhängigkeit von der Position des Rings die Teilimpedanz der Messspule zwischen zwei benachbarten Spannungsabgriffen beeinflusst. Mit Hilfe einer Auswerteschaltung kann damit die relative Position des Rings bezüglich der Spannungsabgriffe bestimmt werden. Allerdings ergibt sich auch hierbei lediglich die Position auf direktem Weg.

In der Druckschrift DE 197 35 375 C1 ist ein Magnetventil, insbesondere für Ein-und Auslassventile von Brennkraftmaschinen beschrieben. Zur Regelung der Bestromung des Magnetantriebs wird die Stellung des Ventilankers durch ein Piezoelement erfasst, das die Kraft der Ventilfeder misst. Daraus lässt sich die jeweilige Position des Ankers und so der Hubvedauf und damit die Geschwindigkeit des Ankers bestimmen. Als nachteilig erweist sich hierbei der stark eingeschränkte Aufbau des Sensors und die Bestimmung der Geschwindigkeit aus dem zeitlichen Verlauf der Position.

Die aus der Praxis bekannte Bestimmung der Geschwindigkeit aus dem Wegsignal durch Differenzierung des Signals hat den entscheidenden Nachteil, dass generell in differenzierenden Systemen Störungen, insbesondere Rauschen, sehr großen Einfluss auf das Ausgangssignal haben. Damit steigen die Anforderungen an die Qualität des Wegsignals sehr stark an, insbesondere in Bezug auf Linearität und dem Signal-Rausch-Verhältnis, was den Einsatz von teuren rauscharmen Sensoren erforderlich macht.

Prinzipiell könnten auch zwei Sensoren eingesetzt werden, von denen der eine den zeitlichen Verlauf der Position und der andere den der Geschwindigkeit des Messobjekts erfasst. Dabei steigen jedoch bedingt durch die Sensoren und die jeweils notwendigen Auswerteelektroniken der Platzbedarf und die Kosten des Sensorsystems erheblich an. Zudem hat eine zusätzlich notwendige Synchronisierung der beiden Sensoren negative Auswirkungen.

Der vorliegenden Erfindung liegt daher die Aufgabe zugrunde, eine Vorrichtung und ein Verfahren der eingangs genannten Art zur Erfassung von Position und Geschwindigkeit eines Messobjekts anzugeben, bei dem sowohl die Position als auch die Geschwindigkeit mit nur einem Sensor gleichzeitig und ohne nachfolgende Differenzierung des Wegsignals möglichst kostengünstig, langzeitstabil und bei möglichst kleinen Abmessungen der Vorrichtung gemessen werden kann.

Die erfindungsgemäße Vorrichtung löst die voranstehende Aufgabe durch die Merkmale des Patentanspruchs 1. Danach ist eine solche Vorrichtung **dadurch gekennzeichnet, dass** zur gleichzeitigen Messung der Position und Geschwindigkeit das Target zwei Teile aufweist, wobei ein Teil aus einem elektrisch leitfähigen Material aufgebaut ist und der andere Teil als ein Magnet ausgeführt ist.

Hinsichtlich eines Verfahrens wird die voranstehende Aufgabe durch die Merkmale des Patentanspruchs 32 gelöst. Hiernach ist ein Verfahren zur Erfassung der Position und der Geschwindigkeit eines Messobjekts **dadurch gekennzeichnet, dass** zur gleichzeitigen Messung der Position und Geschwindigkeit durch eine Auswerteschaltung aus dem Ausgangssignal des elektronischen Bauteils zum Addieren der abgegriffenen Spannungen eine der Position des Targets proportionale und eine der Geschwindigkeit des Targets proportionale Spannungskomponente bestimmt wird.

Erfindungsgemäß ist zunächst erkannt worden, dass eine Vorrichtung zur Bestimmung der Position und der Geschwindigkeit eines Messobjekts besonders effektiv und Platz sparend aufgebaut werden kann, wenn mit einem Sensor sowohl die Position als auch die Geschwindigkeit gleichzeitig gemessen wird. Erfindungsgemäß ist ferner erkannt worden, dass durch spezielle Ausgestaltung des Targets eines Wirbelstromsensors ein Signal erzeugbar ist, das sowohl einen positionsabhängigen als auch einen geschwindigkeitsabhängigen Anteil enthält und dass diese Komponenten mittels einer einfachen Auswerteschaltung aus dem Sensorsignal gewonnen werden können.

An das Messobjekt ist ein mit der Messspule elektromagnetisch gekoppeltes Target (= Geber) angebracht, welches erfindungsgemäß aus zwei Teilen ausgebildet ist, wobei der eine aus einem elektrisch leitenden Material und der andere aus einem Magneten besteht. Bei dieser Vorrichtung wird erfindungsgemäß ausgenutzt, dass die Relativbewegung zwischen dem Magneten und der Messspule eine Induktionsspannung Uv zur Folge hat, die als Maß für die Bewegungsgeschwindigkeit verwendet wird. Gleichzeitig wird ein Spannungssignal Up infolge der Impedanz-änderung der Messspule, welche durch den elektrisch leitenden Teil des Targets hervorgerufen wird, als Maß für die Targetposition genutzt.

In einer bevorzugten Ausgestaltung der erfindungsgemäßen Vorrichtung überschreitet die Länge des gesamten Targets, den Abstand zwischen zwei benachbarten Spannungsabgriffen der Messspule nicht und ist vorzugsweise ungefähr gleich diesem Abstand. Dadurch werden ein optimales Verhältnis von Messbereich zur Länge der Messspule und eine maximale Linearität der Ausgangssignale erreicht.

Vorzugsweise wird die Messspule mit hochfrequenter Wechselspannung (ca. 20 kHz bis 500 kHz) beaufschlagt, wobei die genaue Frequenzwahl von der benötigten Bewegungsfrequenz des Messobjekts abhängt. Auf Grund der einfachen Ausführung des Oszillators mit stabiler Frequenz und Amplitude ist eine symmetrische Speisung der Messspule mit zwei komplementären Wechselspannungen, vorzugsweise bipolare Rechteckspannungen, sehr vorteilhaft. Die an der Messspule abgegriffenen Spannungen werden mit Hilfe eines summierenden Bauteils aufaddiert. Dessen Ausgangssignal stellt eine additive Überlagerung der Spannungen Uv und Up dar.

Die Auswertung des Ausgangssignals wird vorzugsweise durch eine Auswerteschaltung durchgeführt, die als analoge oder vorzugsweise digitale Schaltung aufgebaut ist. Eine digitale Auswerteschaltung besteht im Wesentlichen aus einem Analog-/Digital-Wandler und einem Mikrocontroller. Mit diesem Mikrocontroller kann in besonders vorteilhafter Weise die Wechselspannung zur Speisung der Messspule erzeugt werden.

Bei einer besonders vorteilhaften Ausgestaltung des Targets ist das Target aus einem nicht ferromagnetischen Material wie z.B. Aluminium oder Kupferlegierungen ausgebildet und besitzt eine Wandstärke, die größer ist als die Eindringtiefe des Wirbelstroms bei der entsprechend gewählten Frequenz. Damit wird erreicht, dass der Einfluss der elektrischen Leitfähigkeit des Magneten auf die Spannung Up möglichst gering ist.

Weiterhin ist es vorteilhaft, wenn der Magnet ein Permanentmagnet aufweist, im Wesentlichen stab- oder ringförmig ausgebildet und vorzugsweise in Längsrichtung magnetisiert ist. Dabei sollten sowohl die magnetische Permeabilität µₘ des Magneten (µₘ < 3) als auch das Verhältnis von Durchmesser des Magneten zur Messspulenlänge (< 10) möglichst klein und der Innendurchmesser der Messspule nicht viel größer als der Durchmesser des Stabmagneten sein. Damit werden eine maximale Empfindlichkeit und eine hohe Stabilität des Signals Uv entlang der Messpule erreicht.

Hinsichtlich der Anordnung des Targets und der Messspule sind unterschiedliche vorteilhafte Ausführungsformen denkbar. Bei einer ersten Ausführung bewegt sich das Target innerhalb und entlang der Messpule, wobei der ringförmig aufgebaute elektrisch leitende Teil des Targets einen stabförmigen Magneten umgreift. In einer anderen Anordnung umgreift das Target die Messspule, wobei der Permanentmagnet ebenfalls ringförmig ausgelegt ist und seinerseits das elektrisch leitende Material umgreift. Eine weitere Möglichkeit bietet ein elektrisch leitender Kem innerhalb der Messspule, so dass das Positionssignal Up direkt von diesem Kem und das Geschwindigkeitssignal Uv von der Mitte der Messspule abgegriffen werden können.

Zum Betreiben dieser Vorrichtungen wird vorzugsweise das erfindungsgemäße Verfahren eingesetzt. Dabei wird die Messspule mit zwei Wechselspannungen U1 und U2 beaufschlagt, die vorzugsweise komplementär zueinander sind. Hinsichtlich einer besonders einfachen Auswertung der Sensorsignale sind die verwendeten Wechselspannungen (vorzugsweise bipolare) Rechteckspannungen. Innerhalb einer Periode des Ausgangssignals des elektronischen Bauteils zum Addieren der abgegriffenen Spannungen wird zu zwei vorgegebenen Zeitpunkten t1 und t2 das Ausgangssignal abgetastet. Die Zeitpunkte t1 und t2 sind so gewählt, dass sich das Ausgangssignal bei dem einen Abtastzeitpunkt in der oberen Halbwelle (H) und bei dem anderen Abtastzeitpunkt in der unteren Halbwelle (L) befindet und in beiden Fällen eventuelle Einschwingvorgänge abgeschlossen sind. Die Differenz zwischen den Abtastwerten [H - L] ist ein Maß für die Position des Targets. Mit dem Ausdruck [0,5 x (H + L) - Uref] ist ein Maß für die Geschwindigkeit des Targets gegeben. Zur Erhöhung der Auflösung und Genauigkeit werden die Abtastungen des Ausgangssignals und deren Auswertungen vorzugsweise periodisch wiederholt und über die jeweiligen Messergebnisse gemittelt.

Besonders vorteilhaft bei der erfindungsgemäßen Vorrichtung und dem erfindungsgemäßen Verfahren ist die weitgehende Kompensation der durch Alterung oder Temperatureinflüsse langzeitigen Offsetdrift durch die durchgeführte Differenzbildung.

Vorstehende Ausführungen zu einer Vorrichtung und einem Verfahren zur Erfassung von Position und Geschwindigkeit eines Messobjekts bezüglich eines Sensors sind nicht auf die bisher beschriebenen translatorischen Systeme beschränkt, sondern gelten in rotatorischen Systemen in analoger Weise. Dort ermöglichen Sie die gleichzeitige Messung der Winkelposition und der Drehgeschwindigkeit.

Es gibt nun verschiedene Möglichkeiten die Lehre der vorliegenden Erfindung in vorteilhafter Weise auszugestalten und weiterbilden. Dazu ist einerseits auf die den Patentansprüchen 1 und 32 nachgeordneten Ansprüche andererseits auf die nachfolgende Erläuterung von Ausführungsbeispielen der Erfindung anhand der Zeichnungen zu verweisen. In der weiteren Beschreibung werden anhand der zeichnerischen Darstellungen verschiedene bevorzugte Ausführungsbeispiele, sowie weitere Merkmale und Vorteile der Erfindung beschrieben. In der Zeichnung zeigt
- Fig. 1: die schematische Prinzipdarstellung einer erfindungsgemäßen Vorrichtung in Form eines Blockschaltbildes,
- Fig. 2: eine weitere Ausführungsform für eine solche Vorrichtung mit einem Target, das die Messspule umgreift,
- Fig. 3: eine dritte Ausführungsform, bei der das Positionssignal direkt am Kern abgenommen wird,
- Fig. 4: die schematische Darstellung einer Vorrichtung zur Ermittlung von Winkel- und Drehgeschwindigkeit und
- Fig. 5: der typische Verlauf des Sensorausgangssignals.

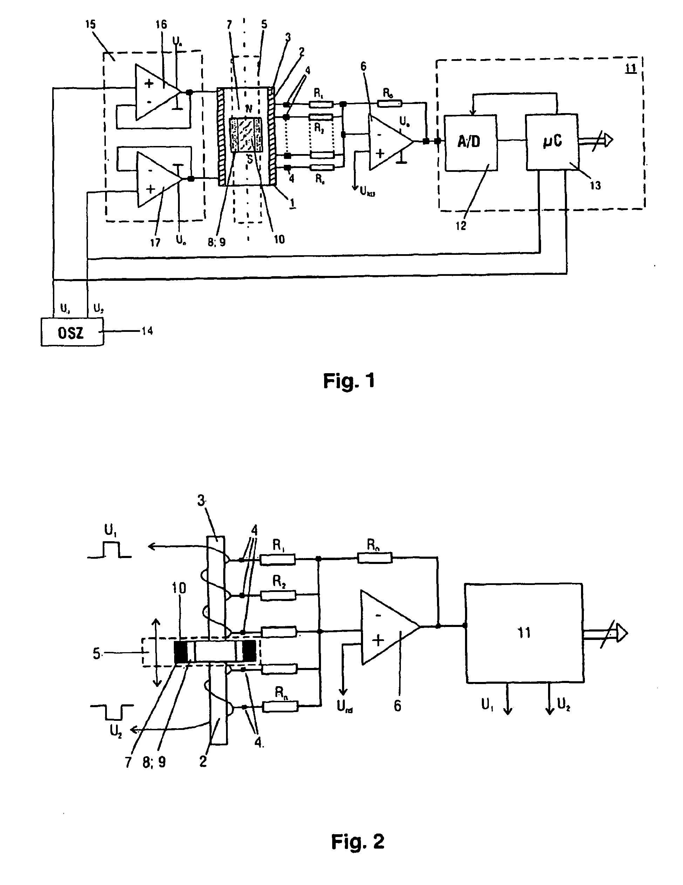

Bei einem ersten Ausführungsbeispiel einer erfindungsgemäßen Vorrichtung (Fig. 1) ist ein Sensor 1 vorgesehen, der eine auf einen Spulenkörper 3 gewickelte Messspule 2 mit mehreren Abgriffen 4 aufweist. Im Innern des Spulenkörpers 3 bewegt sich ein Messobjekt 5 zusammen mit einem elektromagnetisch mit der Messspule 2 gekoppeltem Target 7 entlang der Längsachse der Messspule 2. Das Target 7 setzt sich aus zwei Teilen zusammen, wobei der erste, der Spule zugewandte Teil als Ring 9 aus einem elektrisch leitendem Material hergestellt ist und den zweiten Teil, einen Permanentmagneten 10, umgreift. Dabei überschreitet die Länge des Targets 7 den Abstand zwischen zwei benachbarten Abgriffen 4 nicht. Dadurch werden gleichzeitig die maximale Linearität und das optimale Verhältnis von Messbereich zur Länge der Messspule 2 erreicht. Weiterhin ist der Ring 9 aus Aluminium oder einer Kupferlegierung hergestellt, wobei seine Wandstärke größer als die Eindringtiefe des Wirbelstroms ist. Der Permanentmagnet 10 ist als Stabmagnet ausgelegt und in Längsrichtung (= Bewegungsrichtung) magnetisiert.

Die Messspule 2 wird über die Treiber 15 (Operationsverstärker OP16 und OP17) mit zwei komplementären bipolaren Rechteckspannungen U1 und U2 gespeist, welche von einem Oszillator 14 erzeugt werden und deren Frequenz in Abhängigkeit von der Bewegungsfrequenz des Targets vorzugsweise im Bereich von 20 kHz bis 500 kHz liegt.

Die an den Abgriffen 4 anliegenden Wechselspannungen werden mit Hilfe eines Operationsverstärkers OP6 und eines Widerstandsnetzwerks R0, R1, ..., Rn aufaddiert. Bei einer Bewegung des Targets 7 relativ zur Messspule 2 stellt sich am Ausgang des OP6 eine Wechselspannung ein, die als Summe einer transformatorischen und einer generatorischen Spannung angesehen werden kann. Dabei ist die transformatorische Komponente proportional zur Position und die generatorische Komponente proportional zur Geschwindigkeit des Targets 7.

Für die Auswertung der beiden Signalkomponenten ist eine Auswerteschaltung 11 vorgesehen, deren Eingang mit dem Ausgang des summierenden Verstärkers 6 verbunden ist. Diese Auswerteschaltung 11 besteht aus einem A/D-Wandier 12 und einem Mikrocontroller 13, der den A/D-Wandler steuert und gleichzeitig zur Erzeugung der Wechselspannungen U1 und U2 genutzt werden kann.

Die in Fig. 2 dargestellte Vorrichtung unterscheidet sich von dem zuvor erörterten Ausführungsbeispiel dadurch, dass sich das Messobjekt mit dem Target 7 außerhalb der Messspule 2 bewegt. Auch hier besteht das Target 7 aus zwei Teilen, wobei der Permanentmagnet 10 als Ringmagnet ausgebildet ist und den elektrisch leitfähigen Ring 9 umgreift. Die Messspule 2 mit ihren Abgriffen 4 ist auf einen Spulenkörper 3 aus weichmagnetischem Material gewickelt und wird mit zwei komplementären bipolaren Rechteckspannungen U1 und U2 gespeist, die analog zum zuvor beschriebenen Ausführungsbeispiel wiederum direkt von der Auswerteschaltung 11 erzeugt werden können.

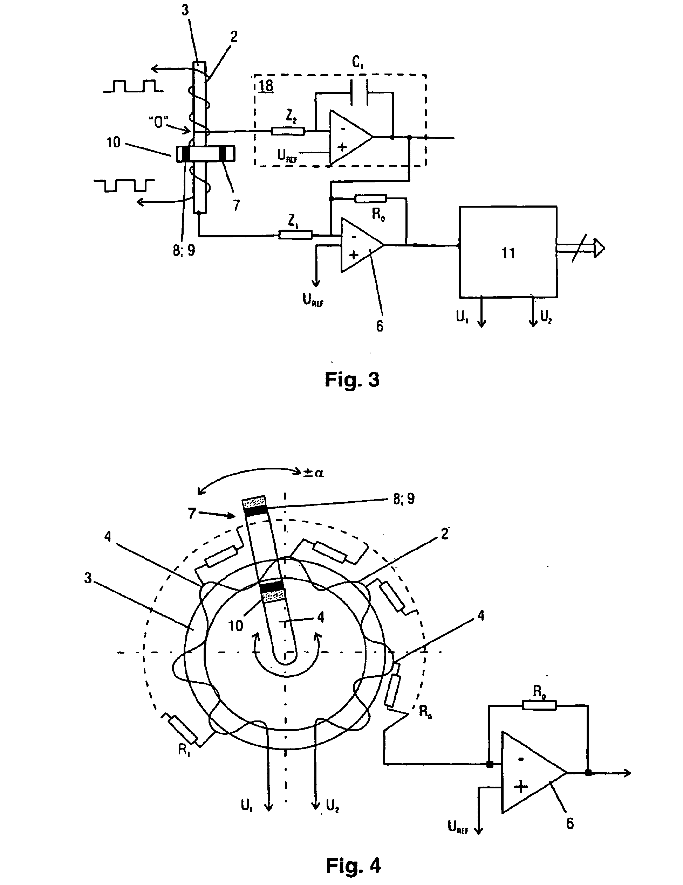

Das dritte Ausführungsbeispiel der erfindungsgemäßen Vorrichtung ist in Fig. 3 abgebildet. Die in diesem Fall einlagige Messspule 2 ist auf einen Spulenkörper 3 gewickelt. Von diesem Spulenkörper 3 wird direkt ein Signal abgegriffen und mit dem OP6 verstärkt. Gleichzeitig liegt am invertierenden Eingang des OP6 die Ausgangsspannung eines Integrators 18 an, wobei der Eingang des Integrators mit dem Mittelabgriff "0" der Messspule 2 verbunden ist.

Bei dieser Ausführungsform gibt es zwei Varianten bei der Signalauswertung. Bei der ersten wird die Zeitkonstante des Integrators 18 so gewählt, dass die hochfrequente Komponente des Signals am Abgriff 4 herausgefiltert wird und so am Ausgang des Integrators 18 das Geschwindigkeitssignal anliegt. Gleichzeitig wird am Ausgang des OP6 ein Signal proportional zur Position des Targets 7 erzeugt. Bei der zweiten Variante wird die Spannung am Ausgang des Integrators 18 mit der Wechselspannung, die am Spulenkörper 3 abgegriffen wird, aufaddiert und die weitere Auswertung in einer separaten Auswerteschaltung 11 durchgeführt, wie sie bereits zu den zuvor erörterten Ausführungsbeispielen beschrieben wurde.

In Fig. 4 wird eine Vorrichtung zur Messung von Drehbewegungen vorgestellt. Eine einlagige Messspule 2 ist auf einen ringförmigen Spulenkörper 3 aus weichmagnetischem Material gewickelt und weist n Abgriffe mit den Widerständen R1, ..., Rn auf, die direkt mit der Messspule integriert werden können. Das ebenfalls zweiteilig aufgebaute Target 7 umgreift die Messpule 2. Die Messspule 2 wird wiederum mit zwei komplementären bipolaren Rechteckspannungen U1 und U2 gespeist. Am Ausgang des OP6 wird auch hier eine Wechselspannung mit zwei Komponenten erzeugt, die sowohl Informationen über den Drehwinkel als auch über die Drehgeschwindigkeit enthält. Die Auswertung des Sensorsignals erfolgt wieder mit der zuvor beschriebenen Auswerteschaltung 11.

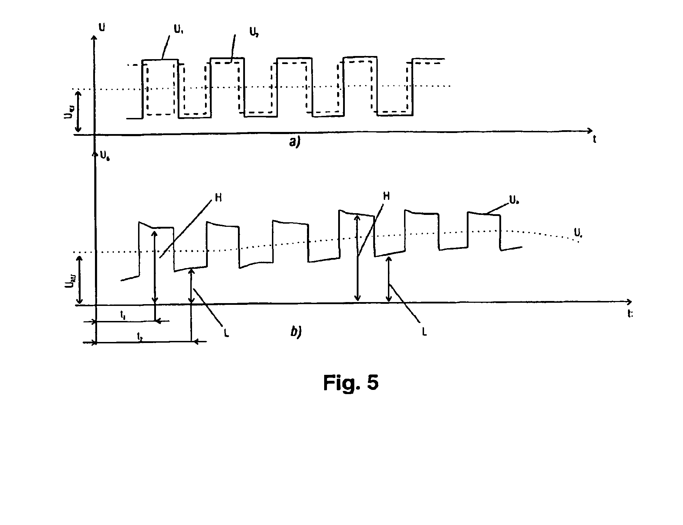

Im Folgenden wird mit Hilfe von Fig. 5 zu den verschiedenen zuvor erörterten Ausführungsbeispielen der erfindungsgemäßen Vorrichtung ein Verfahren zur gleichzeitigen Erfassung von Position und Geschwindigkeit eines Messobjekts 5 relativ zum Sensor 1 vorgestellt. Die Messspule 2 wird dazu mit zwei komplementären Rechteckspannungen U1 und U2 gespeist, wie sie aus Fig. 5a hervorgehen. Uref ist dabei eine stabile Konstantspannung, um deren Betrag die beiden Spannungen U1 und U2 zu positiven Spannungen hin verschoben ist. Der Betrag dabei ist so gewählt, dass er etwa die Hälfte der Versorgungsspannung Un der Operationsverstärker (OP6, OP16 und OP17) annimmt. Liegt Un beispielsweise bei +5 V, so wird Uref zu +2,5 V gewählt.

Fig. 5b zeigt einen typischen Signalverlauf am Ausgang des OP6. Dieses Signal stellt eine Überlagerung der Spannungen Up proportional der Position, Uv proportional der Geschwindigkeit und Uref dar. Innerhalb einer Periode der Ausgangsspannung des summierenden Verstärkers 6 wird zu den Abtastzeitpunkten t1 und t2 das Ausgangssignal abgetastet, wobei die Abtastzeitpunkte t1 und t2 so gewählt sind, dass einmal während der oberen Halbwelle H und einmal während der unteren Halbwelle L des Ausgangssignals abgetastet wird. Zu beiden Abtastzeitpunkten sind eventuelle Einschwingvorgänge bereits abgeklungen. Die Differenz [H - L] ist dann ein Maß für die Position des Targets und der Ausdruck [0,5 x (H + L) - Uref] ein Maß für dessen Geschwindigkeit.

Die Berechnungen können mit Hilfe eines Mikrocontrollers 13 durchgeführt werden, welcher auch die Abtastzeitpunkte t1 und t2 bestimmt, den A/D-Wandler 12 steuert und unter Umständen die Rechteckspannungen U1 und U2 erzeugt.

Zur Steigerung von Auflösung und Genauigkeit wird die Abtastung und Auswertung des Ausgangssignals periodisch wiederholt und über eine vorgegebene Anzahl von Ergebnissen gemittelt.

Hinsichtlich weiterer vorteilhafter Ausgestaltungen und Weiterbildungen der erfindungsgemäßen Vorrichtung zur Erfassung der Position und Geschwindigkeit eines Messobjekts relativ zum Sensor wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend erörterten Ausführungsbeispiele die beanspruchte Lehre lediglich erläutern, diese jedoch nicht auf die Ausführungsbeispiele einschränken.

## Patentansprüche

1. Vorrichtung zur Erfassung von Position und Geschwindigkeit eines Messobjekts (5) relativ zu einem Sensor (1), wobei der Sensor (1) und das Messobjekt (5) relativ zueinander verschiebbar angeordnet sind, wobei der Sensor (1) eine Messspule (2) mit mindestens einem, vorzugsweise mehreren Spannungsabgriffl-en (4) und ein an das Messobjekt (5) angebrachtes und mit der Messspule (2) elektromagnetisch gekoppeltes und mit dem Messobjekt (5) verbundenes Target (7) aufweist,
**dadurch gekennzeichnet, dass** zur gleichzeitigen Messung der Position und Geschwindigkeit das Target (7) zwei Teile (8,10) ausweist, wobei ein Teil (8) aus einem elektrisch leitfähigen Material aufgebaut ist und der andere Teil als ein Magnet (10) ausgeführt ist und wobei der Magnet (10) als Permanentmagnet ausgeführt ist, wodurch der eine Teil (8) eine von der Position des Targets (7) relativ zum Sensor (1) abhängige Änderung der Impedanz des Sensors (1) hervorruft und der Magnet (10) eine von der Geschwindigkeit des Targets (7) relativ zum Sensor (7) abhängige Spannung in dem Sensor (1) induziert, und dass dem Sensor (1) ein elektronisches Bauteil (6) zum Addieren der an dem Sensor (1) abgegriffenen Spannungen zugeordnet ist, wobei das Ausgangssignal des Bauteils (6) aus der zweiteiligen Ausgestaltung des Targets (7) resultierende Informationen über die Position und Geschwindigkeit des Messobjekts relativ zum Sensor (1) enthält.

2. Vorrichtung nach Anspruch 1, **dadurch gekennzeichnet, dass** die Messspule (2) einlagig oder mehrlagig aufgebaut ist.

3. Vorrichtung nach Anspruch 1 oder 2, **dadurch gekennzeichnet, dass** bei mehreren Spannungsabgriffen (4) der Messspule (2) die Spannungsabgriffe (4) im Wesentlichen gleichen Abstand zueinander aufweisen.

4. Vorrichtung nach einem der Ansprüche 1 bis 3, **dadurch gekennzeichnet, dass** die Länge des Targets (7) den Abstand zwischen zwei benachbarten Spannungsabgriffen (4) der Messspule (2) nicht überschreitet oder
dass die Länge des Targets (7) ungefähr gleich dem Abstand zwischen zwei benachbarten Spannungsabgriffen (4) ist.

5. Vorrichtung nach einem der Ansprüche 1 bis 4, **dadurch gekennzeichnet, dass** das Target (7) im Innem oder außehalb der Messspule (2) verschiebbar ist, wobei
das Target (7) die Messspule (2) umgreifen kann.

6. Vorrichtung nach einem der Ansprüche 1 bis 5, **dadurch gekennzeichnet, dass** der eine Teil (8) des Targets (7) aus einem nicht ferromagnetischen Material und/oder
aus Aluminium oder Kupferlegierungen hergestellt ist.

7. Vorrichtung nach einem der Ansprüche 1 bis 6, **dadurch gekennzeichnet, dass** die Wandstärke des einen Teils (8) des Targets (7) größer als die Eindringtiefe des Wirbelstroms ist und/oder der eine Teil (8) des Targels (7)
als Ring (9) ausgeführt ist.

8. Vorrichtung nach einem der Ansprüche 1 bis 7, **dadurch gekennzeichnet, dass** der Magnet (10) als Stabmagnet ausgestaltet ist und
dass der Magnet (10) in Längsrichtung magnetisiert sein kann.

9. Vorrichtung nach einem der Ansprüche 1 bis 8, **dadurch gekennzeichnet, dass** der Magnet (10) als Ringmagnet ausgestaltet ist und
dass der Magnet (10) in Längsrichtung magnetisiert sein kann.

10. Vorrichtung nach einem der Ansprüche 1 bis 9, **dadurch gekennzeichnet, dass** der eine Teil (8) des Targets (7) als Ring (9) ansgeführt ist und der Ring (9) den Magneten (10) umgreift oder
dass der Ring (9) von dem Magneten (10) umgriffen wird.

11. Vorrichtung nach Anspruch 1 bis 10, **dadurch gekennzeichnet, dass** die Messspule (2) mit zwei Wechselspannungen (U1, U2) gespeist wird, wobei
die beiden Wechselspannungen (U1, U2) vorzugsweise komplementär zueinander sind und/oder
dass es sich bei den beiden Wechselspannungen (U1, U2) um Rechteckspannungen handeln kann, wobei
die Rechteckspannungen vorzugsweise bipolar und
die beiden Wechselspannungen (U1, U2) vorzugsweise hochfrequent sind.

12. Vorrichtung nach einem der Ansprüche 1 bis 11, **dadurch gekennzeichnet, dass** dem elektronische Bauteil (6) zum Addieren der am Sensor abgegriffenen Spannungen die Spannungen an den Spannungsabgriffen (4) der Messspule (2) zugeführt werden und/oder
dass das elektronische Bauteil (6) zum Addieren der abgegriffenen Spannungen einen summierenden Operationsverstärker aufweist.

13. Vorrichtung nach einem der Ansprüche 1 bis 12, **dadurch gekennzeichnet, dass** am Ausgang des elektronischen Bauteils (6) zum Addieren der abgegriffenen Spannungen eine Auswerteschaltung (11) zur Auswertung des Messsignals vorgesehen ist.

14. Vorrichtung nach einem der Ansprüche 1 bis 13, **dadurch gekennzeichnet, dass** ein Spannungsabgriff (4) in der Mitte ("0") der Messspule (2) mit einem Integrator (18) verbunden ist, wobei
die Zeitkonstante des Integrators (18) so gewählt sein kann, dass die hochfrequenten Komponenten des am Spannungsabgriff (4) entnommenen Signals herausgefiltert werden und am Ausgang des Integrators eine der Geschwindigkeit proportionale Spannung anliegt oder
dass der Ausgang des Integrators (18) zusammen mit einem Spannungsabgriff am Spulenkörper (3) dem elektronischen Bauteil (6) zum Addieren der an dem Sensor (1) abgegriffenen Spannungen zugeführt werden kann.

15. Verfahren zur Erfassung von Position und Geschwindigkeit eines Messobjekts (5) relativ zu einem Sensor (1), wobei der Sensor (1) und das Messobjekt (5) relativ zueinander verschiebbar angeordnet sind, wobei der Sensor (1) eine Messspule (2) mit mindestens einem, vorzugsweise mehreren Spannungsabgriff/-en (4) und ein an das Messobjekt (5) angebrachtes und mit der Messspule (2) elektromagnetisch gekoppeltes Target (7) aufweist, vorzugsweise unter Verwendung einer Vorrichtung nach einem der Ansprüche 1 bis 14,
**dadurch gekennzeichnet, dass** dem Sensor ein elektronisches Bauteil (6) zum Addieren der an dem Sensor (1) abgegriffenen Spannungen zugeordnet ist und durch eine Auswerteschaltung (11) aus dem Ausgangssignal des elektronischen Bauteils (6) zum Addieren der am Sensor (1) abgegriffenen Spannungen eine der Position des Targets proportionale Spannungskomponente Up und eine der Geschwindigkeit des Targets proportionale Spannungskomponente Uv bestimmt wird, wobei die Spannungskomponente Up durch einen elektrisch leitfähigen Teil (8) des Targets (7), durch den die Impedanz des Sensors (1) in Abhängigkeit der Position des Targets (7) relativ zum Sensor (1) verändert wird, und die Spannungskomponente Uv durch einen anderen Teil des Targets, der einen Magneten (10) umfasst und durch den eine von der Geschwindigkeit des Targets (7) relativ zum Sensor (1) abhängige Spannung in dem Sensor (1) induziert wird, hervorgerufen wird.

16. Verfahren nach Anspruch 15, **dadurch gekennzeichnet, dass** die Messspule (2) mit zwei komplementären bipolaren Rechteckspannungen (U1, U2) beaufschlagt wird.

17. Verfahren nach Anspruch 15 oder 16, **dadurch gekennzeichnet, dass** zu zwei vorgegebenen Abtastzeitpunkten (t1, t2) das Ausgangssignal des elektronischen Bauteils (6) abgetastet wird, wobei ein Abtastzeitpunkt im Bereich der oberen Halbwelle des Ausgangssignals und der andere Abtastzeitpunkt im Bereich der unteren Halbwelle des Ausgangssignals liegt.

18. Verfahren nach den Ansprüchen 15 bis 17, **dadurch gekennzeichnet, dass** aus der Differenz [H - L] des während der oberen Halbwelle abgetasteten Signalwertes H und des während der unteren Halbwelle abgetasteten Signalwertes Lauf die Position des Targets bzw. des Messobjekts geschlossen wird.

19. Verfahren nach den Ansprüchen 15 bis 18, **dadurch gekennzeichnet, dass** mit der Formel [0.5 x (H + L.) - Uref] die Geschwindigkeit des Targets bzw. des Messobjekts bestimmt wird, wobei Uref eine stabile Gleichspannung als Referenzspannung für das elektronische Bauteil (6) zum Addieren der abgegriffenen Spannungen ist.

20. Verfahren nach den Ansprüchen 15 bis 19, **dadurch gekennzeichnet, dass** die Abtastung des Ausgangssignals des elektronischen Bauteils (6) und die Auswertung der abgetasteten Signalwerte (H, L) periodisch wiederholt werden, wobei
über mehrere Messwerte für Position und/oder Geschwindigkeit gemittelt werden kann.

## Claims

1. A device for detecting the position and velocity of a test object (5) relative to a sensor (1), wherein the sensor (1) and the test object (5) are slidably arranged relative to each other, wherein the sensor (1) comprises a measuring coil (2) having at least one voltage tap (4), preferably a plurality of voltage taps (4), and a target (7) that is mounted on the test object (5), is electromagnetically coupled to the measuring coil (2) and is connected to the test object (5), **characterised in that** for simultaneously measuring the position and the velocity the target (7) comprises two parts (8, 10), one part (8) being formed from an electrically conductive material and the other part being in the form of a magnet (10), and wherein the magnet (10) is in the form of a permanent magnet, with the result that the one part (8) causes a change in the impedance of the sensor (2) dependent on the position of the target (7) relative to the sensor (1) and the magnet (10) induces in the sensor (1) a voltage dependent on the velocity of the target (7) relative to the sensor (1), and **in that** an electronic component (6) for adding the voltages tapped at the sensor (1) is associated with the sensor (1), wherein, as a consequence of the two-part design of the target (7), the output signal of the component (6) contains information about the position and velocity of the test object relative to the sensor (1).

2. A device according to claim 1, **characterised in that** the measuring coil (2) is of single-layer or multi-layer construction.

3. A device according to claim 1 or 2, **characterised in that** when the measuring coil (2) has a plurality of voltage taps (4), the voltage taps (4) are substantially the same distance apart from each other.

4. A device according to any one of claims 1 to 3, **characterised in that** the length of the target (7) does not exceed the distance between two adjacent voltage taps (4) of the measuring coil (2) or
**in that** the length of the target (7) is approximately the same as the distance between two adjacent voltage taps (4).

5. A device according to any one of claims 1 to 4, **characterised in that** the target (7) is slidable inside or outside the measuring coil (2), wherein
the target (7) is able to engage around the measuring coil (2).

6. A device according to any one of claims 1 to 5, **characterised in that** the one part (8) of the target (7) is made from a non-ferromagnetic material and/or
from aluminium or from copper alloys.

7. A device according to any one of claims 1 to 6, **characterised in that** the wall thickness of the one part (8) of the target (7) is greater than the penetration depth of the eddy current and/or
the one part (8) of the target (7) is in the form of a ring (9).

8. A device according to any one of claims 1 to 7, **characterised in that** the magnet (10) is designed as a bar magnet and
**in that** the magnet (10) can be magnetised in the longitudinal direction.

9. A device according to any one of claims 1 to 8, **characterised in that** the magnet (10) is designed as an annular magnet and
**in that** the magnet (10) can be magnetised in the longitudinal direction.

10. A device according to any one of claims 1 to 9, **characterised in that** the one part (8) of the target (7) is in the form of a ring (9) and the ring (9) engages around the magnet (10) or
**in that** the magnet (10) engages around the ring (9).

11. A device according to any one of claims 1 to 10, **characterised in that** the measuring coil (2) is fed with two alternating voltages (U1, U2), wherein
the two alternating voltages (U1, U2) are preferably complementary to each other and/or
**in that** the two alternating voltages (U1, U2) can be square wave voltages, wherein
the square wave voltages are preferably bipolar and
the two alternating voltages (U1, U2) are preferably high-frequency.

12. A device according to any one of claims 1 to 11, **characterised in that** the voltages at the voltage taps (4) of the measuring coil (2) are fed to the electronic component (6) for adding the voltages tapped at the sensor and/or
**in that** the electronic component (6) for adding the tapped voltages comprises a summing operational amplifier.

13. A device according to any one of claims 1 to 12, **characterised in that** an evaluation circuit (11) for evaluating the test signal is provided at the output of the electronic component (6) for adding the tapped voltages.

14. A device according to any one of claims 1 to 13, **characterised in that** a voltage tap (4) in the middle ("0") of the measuring coil (2) is connected to an integrator (18), wherein
the time constant of the integrator (18) can be so selected that the high-frequency components of the signal picked off at the voltage tap (4) can be filtered out and a voltage proportional to the velocity is present at the output of the integrator, or
the output of the integrator (18) together with a voltage tap at the coil body (3) can be fed to the electronic component (6) for adding the voltages tapped at the sensor (1).

15. A method for detecting the position and the velocity of a test object (5) relative to a sensor (1), wherein the sensor (1) and the test object (5) are slidably arranged relative to each other, wherein the sensor (1) comprises a measuring coil (2) having at least one voltage tap (4), preferably a plurality of voltage taps (4), and a target (7) mounted on the test object (5) and electromagnetically coupled to the measuring coil (2), preferably using a device according to any one of claims 1 to 14,
**characterised in that** an electronic component (6) for adding the voltages tapped at the sensor (1) is associated with the sensor and using an evaluating circuit (11) a voltage component Up proportional to the position of the target and a voltage component Uv proportional to the velocity of the target are determined from the output signal of the electronic component (6) for adding the voltages tapped at the sensor (1), wherein the voltage component Up is caused by an electrically conductive part (8) of the target (7), by which the impedance of the sensor (1) is altered dependent on the position of the target (7) relative to the sensor (1), and the voltage component Uv is caused by a different part of the target, which comprises a magnet (10), and by which a voltage dependent on the velocity of the target (7) relative to the sensor (1) is induced in the sensor (1).

16. A method according to claim 15, **characterised in that** two complementary bipolar square wave voltages (U1, U2) act on the measuring coil (2).

17. A method according to claim 15 or 16, **characterised in that** the output signal of the electronic component (6) is sampled at two predetermined sampling instances (t1, t2), wherein one sampling instant lies in the region of the upper half-wave of the output signal and the other sampling instant lies in the region of the lower half-wave of the output signal time.

18. A method according to claims 15 to 17, **characterised in that** a conclusion is drawn about the position of the target and of the test object from the difference (H-L) of the signal value H sampled during the upper half-wave and the signal value L sampled during the lower half-wave.

19. A method according to claims 15 to 18, **characterised in that** the velocity of the target and of the test object is determined with the formula [0.5 x (H+ L) - Uref], wherein Uref is a stable d.c. voltage as reference voltage for the electronic component (6) for adding the tapped voltages.

20. A method according to claims 15 to 19, **characterised in that** sampling of the output signal of the electronic component (6) and evaluation of the sampled signal values (H, L) are repeated periodically, wherein
averaging is possible over a plurality of measured values for position and/or velocity.

## Revendications

1. Dispositif pour la détection de la position et de la vitesse d'un objet d'essai (5) par rapport à un capteur (1), le capteur (1) et l'objet d'essai (5) étant disposés de manière à pouvoir être déplacés l'un par rapport à l'autre, sachant que le capteur (1) comporte une bobine de mesure (2) présentant au moins une, de préférence plusieurs, prise(s) de tension (4) et une cible (7) montée sur l'objet d'essai (5) et couplée de manière électromagnétique à la bobine de mesure (2) et reliée à l'objet d'essai (5), **caractérisé en ce que** la cible (7) comprend deux parties (8, 10) pour la mesure simultanée de la position et de la vitesse, une partie (8) étant constituée d'un matériau conducteur d'électricité et l'autre partie étant réalisée sous la forme d'un aimant (10) et sachant que l'aimant (10) est réalisé sous la forme d'un aimant permanent, moyen par lequel la partie (8) provoque une modification de l'impédance du capteur (1) dépendante de la position de la cible (7) par rapport au capteur (1) et l'aimant (10) induit une tension dans le capteur (1) dépendante de la vitesse de la cible (7) par rapport au capteur (1), et **en ce qu'**une pièce électronique (6) servant à additionner les tensions prises au niveau du capteur (1) est attribuée au capteur (1), sachant que le signal de sortie de la pièce (6) contient des informations résultant de la configuration en deux parties de la cible (7) concernant la position et la vitesse de l'objet d'essai par rapport au capteur (1).

2. Dispositif selon la revendication 1, **caractérisé en ce que** la bobine de mesure.(2) est composée d'une ou de plusieurs couches.

3. Dispositif selon la revendication 1 ou 2, **caractérisé en ce que**, lors de plusieurs prises de tension (4) de la bobine de mesure (2), les prises de tension (4) présentent un espacement les unes des autres sensiblement identique.

4. Dispositif selon l'une quelconque des revendications 1 à 3, **caractérisé en ce que** la longueur de la cible (7) ne dépasse pas l'espacement existant entre deux prises de tensions adjacentes (4) de la bobine de mesure (2) ou **en ce que** la longueur de la cible (7) est à peu près identique à l'espacement existant entre deux prises de tension adjacentes (4).

5. Dispositif selon l'une quelconque des revendications 1 à 4, **caractérisé en ce que** la cible (7) est déplaçable à l'intérieur ou à l'extérieur de la bobine de mesure (2), sachant que la cible (7) peut entourer la bobine de mesure (2).

6. Dispositif selon l'une quelconque des revendications 1 à 5, **caractérisé en ce qu'**une partie (8) de la cible (7) est fabriquée dans un matériau non ferromagnétique et/ou en aluminium ou en alliages de cuivre.

7. Dispositif selon l'une quelconque des revendications précédentes 1 à 6, **caractérisé en ce que** l'épaisseur de paroi d'une partie (8) de la cible (7) est supérieure à la profondeur de pénétration du courant de Foucault et/ou la partie (8) de la cible (7) est réalisée sous la forme d'un anneau (9).

8. Dispositif selon l'une quelconque des revendications précédentes 1 à 7, **caractérisé en ce que** l'aimant (10) est réalisé sous la forme d'un barreau aimanté et que l'aimant (10) peut être magnétisé dans le sens longitudinal.

9. Dispositif selon l'une quelconque des revendications précédentes 1 à 8, **caractérisé en ce que** l'aimant (10) est réalisé sous la forme d'un aimant annulaire et **en ce que** l'aimant (10) peut être magnétisé dans le sens longitudinal.

10. Dispositif selon l'une quelconque des revendications précédentes 1 à 9, **caractérisé en ce que** la partie (8) de la cible (7) est réalisée sous la forme d'un anneau (9) et l'anneau (9) entoure l'aimant (10) ou **en ce que** l'anneau (9) est entouré de l'aimant (10).

11. Dispositif selon l'une quelconque des revendications précédentes 1 à 10, **caractérisé en ce que** la bobine de mesure (2) est alimentée au moyen de deux tensions alternatives (U1, U2), sachant que les deux tensions alternatives (U1, U2) sont de préférence complémentaires et/ou que les deux tensions alternatives (U1, U2) peuvent être des tensions carrées, sachant que les tensions carrées sont de préférence bipolaires et que les deux tensions alternatives (U1, U2) sont de préférence à haute fréquence.

12. Dispositif selon l'une quelconque des revendications précédentes 1 à 11, **caractérisé en ce que** les tensions présentes au niveau des prises de tension (4) de la bobine de mesure (2) sont conduites vers la pièce électronique (6) servant à additionner les tensions prises au niveau du capteur et/ou **en ce que** la pièce électronique (6) servant à additionner les tensions prises présente un amplificateur opérationnel totalisateur.

13. Dispositif selon l'une quelconque des revendications précédentes 1 à 12, **caractérisé en ce qu'**on a prévu, à la sortie de la pièce électronique (6) servant à additionner les tensions prises, un circuit d'analyse (11) servant à analyser le signal de mesure.

14. Dispositif selon l'une quelconque des revendications précédentes 1 à 13, **caractérisé en ce qu'**une prise de tension (4) est reliée, au milieu (« 0 ») de la bobine de mesure (2), à un intégrateur (18), sachant que la constante temporelle de l'intégrateur (18) peut être choisie de telle sorte que les composantes à haute fréquence du signal prélevé sur la prise de tension (4) soient filtrées et qu'il y ait une tension proportionnelle à la vitesse à la sortie de l'intégrateur ou que la sortie de l'intégrateur (18) peut être amenée, conjointement à une prise de tension située sur le corps de bobine (3), vers la pièce électronique (6) servant à additionner les tensions prises sur le capteur (1).

15. Procédé pour la détection de la position et de la vitesse d'un objet d'essai (5) par rapport à un capteur (1), sachant que le capteur (1) et l'objet d'essai (5) sont disposés de manière à pouvoir être déplacés l'un par rapport à l'autre, le capteur (1) comportant une bobine de mesure (2) présentant au moins une, de préférence plusieurs, prise(s) de tension (4) et une cible (7) montée sur l'objet d'essai (5) et couplée de manière électromagnétique à la bobine de mesure (2), de préférence avec utilisation d'un dispositif selon l'une quelconque des revendications 1 à 14, **caractérisé en ce qu'**une pièce électronique (6) servant à additionner les tensions prises au niveau du capteur (1) est attribuée au capteur et une composante de tension Up proportionnelle à la position de la cible et une composante de tension Uv proportionnelle à la vitesse de la cible sont déterminées par un circuit d'analyse (11) à partir du signal de sortie de la pièce électronique (6) servant à additionner les tensions prises au niveau du capteur (1), sachant que la composante de tension Up est provoquée par une partie conductrice d'électricité (8) de la cible (7), au moyen de laquelle est modifiée l'impédance du capteur (1) en relation avec la position de la cible (7) par rapport au capteur (1), et la composante de tension Uv est provoquée par une autre partie de la cible qui comporte un aimant (10) et au moyen de laquelle une tension dépendante de la vitesse de la cible (7) par rapport au capteur (1) est induite dans le capteur (1).

16. Procédé selon la revendication 15, **caractérisé en ce que** la bobine de mesure (2) est alimentée au moyen de deux tensions carrées bipolaires complémentaires (U1, U2).

17. Procédé selon la revendication 15 ou 16, **caractérisé en ce qu'**à deux moments de détection prédéfinis (t1, t2), le signal de sortie de la pièce électronique (6) est détecté, sachant qu'un moment de détection se situe au niveau de la demi-onde supérieure du signal de sortie et l'autre moment de la détection au niveau de la demi-onde inférieure du signal de sortie.

18. Procédé selon les revendications 15 à 17, **caractérisé en ce que** la position de la cible ou de l'objet d'essai est déduite de la différence [H - L] entre la valeur de signal H détectée pendant la demi-onde supérieure et la valeur de signal L détectée pendant la demi-onde inférieure.

19. Procédé selon les revendications 15 à 18, **caractérisé en ce que** la vitesse de la cible ou de l'objet d'essai est déterminée au moyen de la formule [0,5 x (H + L) - Uref], sachant qu'Uref est une tension continue stable servant de tension de référence pour la pièce électronique (6) servant à additionner les tensions prises.

20. Procédé selon les revendications 15 à 19, **caractérisé en ce que** la détection du signal de sortie de la pièce électronique (6) et l'analyse des valeurs de signal détectées (H, L) sont répétées périodiquement, sachant que le calcul peut étre effectué par le biais de plusieurs valeurs de mesure pour la position et/ou la vitesse.
